(19) Europäisches Patentamt
European Patent Office
Office européen des brevets

(11) EP 4 056 537 A1

(12) **EUROPEAN PATENT APPLICATION**

(43) Date of publication:
**14.09.2022 Bulletin 2022/37**

(21) Application number: **22160656.9**

(22) Date of filing: **08.03.2022**

(51) International Patent Classification (IPC):
**C03C 21/00** (2006.01)    **C03C 23/00** (2006.01)

(52) Cooperative Patent Classification (CPC):
**C03C 21/002; C03C 23/0075**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2021 TR 202100467**

(71) Applicant: **Tubitak**
**06680 Ankara (TR)**

(72) Inventors:
• **SARIGÜZEL, Meryem**
  **41470 KOCAEL (TR)**
• **ÖZTÜRK, Yusuf**
  **41470 KOCAEL (TR)**
• **ÖZDEM R YANIK, Melis Can**
  **41470 KOCAEL (TR)**
• **GÜZEL, Ayd n Süleyman**
  **41470 KOCAEL (TR)**
• **ALCAN, Bilal**
  **41470 KOCAEL (TR)**
• **GÜNAY, Esin**
  **41470 KOCAEL (TR)**

(54) **FAST AND ECONOMICAL GLASS FUNCTIONALIZATION IN ONE STEP**

(57)    The present invention provides a method of one step ion exchange for functionalization thin glasses by strengthening and controlling the optical properties. Owing to controllable optical transmittance and absorbance properties, these thin glasses can be utilized as solar control glasses. A paste containing potassium compound and silver compound was applied to the glass substrate containing an alkali metal component by screen printing, thereafter ion exchange heat treatment was performed below glass transition temperature. The method of the invention can produce a glass with surface compressive stress between 550 and 600 MPa, compressive stress layer in the range of 10-15 $\mu$m. In the antimicrobial activity test, the amount of alive *E.coli* bacteria decreased $\geq$99.9% after 24 hours of contact time. Thin glasses, in which the optical transmittance values are controlled depending on the ion exchange process conditions, spectrally selective, chemically strengthened and showing antimicrobial surface properties that are in accordance with the requirements of the application area, were produced by one step ion exchange.

EP 4 056 537 A1

**Description**

**Technical Field Related to the Invention**

This invention describes a single step ion exchange technique for functionalization of a thin glass by strengthening, providing antimicrobial efficacy and controlling the optical properties, and obtaining a nanometal glass hybrid nanocomposite with this technique. Compressive stress in glasses is obtained by thermal and chemical strengthening which are the surface modification methods used in glass strengthening. The increase in strength occurs when the compressive stress created by the compression layer formed on the surface resists the tensile stress caused by the defects on the interior of the glass. In thermal strengthening, the glass, which is heated to a certain temperature and then rapidly cooled, solidifies by lowering the temperature. During cooling, because the glass surface solidifies faster than the inner parts, compressive stress occurs on the surface and tensile stress on the inside. In chemical strengthening, as a result of the replacement of small ions on the glass surface with larger ions, a surface with high density is obtained, thus compressive stress occurs on the surface. The compressive stress layer depth in chemically strengthened glass is the depth which large displaced ions move inward from the glass surface. The present invention relates to thin glasses substrates simultaneously showing a surface compressive stress, a depth of compression, and antimicrobial surface properties. Moreover, due to controllable optical transmission and absorbance values depending upon the ion exchange process conditions, these thin glasses can be used as solar control glass. The use of this technique allows a more stable and faster reaction to take place, since each glass is coated with a fresh salt mixture, compared to the salt bath technique, where the glasses mostly used for the ion exchange process are immersed in the molten salt bath. Due to the less use of expensive salts, it enables the production of multi-functional thin glasses with an energy and cost-effective process by changing the surface properties. Moreover, due to the application of the salt mixture in the form of paste, it makes possible to coat requested part of the glass surface and thus to obtain a pattern on the glass surface.

The technique is based on obtaining multi-functional glasses in one step ion exchange with potassium nitrate ($KNO_3$) and silver nitrate ($AgNO_3$) paste coated on thin glass substrates via screen printing. The technique comprises the steps of (1) cleaning the thin glass substrates before coating, (2) preparing a paste by mixing inorganic salts $KNO_3$ and $AgNO_3$ with distilled water, (3) applying the paste to the surface of thin glass via screen printing and forming a coating layer, (4) drying the film applied thin glass substrates prior to ion exchange heat treatment, (5) heat treating the glass substrate to ensure ion exchange between the ion exchange invading ions ($K^+$ and $Ag^+$) in the coating layer and the host alkali ions ($Na^+$) in the glass, (6) cleaning the glass substrates after ion exchange heat treatment.

Application fields of these multi-functional thin glass substrates, with a thickness of 2 mm and less than 2 mm, are touch-sensitive display screens or cover plates for various electronic devices (e.g., mobile phones, automated teller machines, hand-held video gaming systems, electronic book readers, personal data assistants, computers, tablets, global positioning system navigation devices), laboratory equipment that is required to remain sterile (parts containing glass), public places like subway-toilet etc., vehicle windows where bacteria formation is undesirable, surfaces of household appliances, various glassware and decoration products and pharmaceutical packaging. In addition, thin glasses produced by the technique of the invention can be used as substrate for sensor systems. Since the glass substrates will be strengthened, the most important limitation in use, brittleness, is eliminated, and also, due to silver ions, surfaces with active surface enhanced Raman scattering used in ultra-sensitive chemical and biological sensor systems are obtained. Another area of use is the optical waveguide component.

**The Prior Art**

Glass strengthening (tempering) can be conducted by two methods such as physical (thermal) or chemical strengthening. The thermal tempering process is based on the rapid cooling of the glasses after they are heated in special furnaces at a temperature lower than the melting point and higher than the glass transition temperature. The thermal tempering of the glass naturally exposes all surfaces and edges of the glass to compression (compression) stress, and the inner parts to tensile stress. Thus, all forces are balanced and the glass becomes more durable. It is very hard to apply thermal tempering process to thin glasses below 2mm thickness due to reasons such as poor optical quality, distortion etc. For this reason, such glasses must be chemically tempered. Chemical strengthening is a surface modification process based on the replacement of alkali ions in salt and glass by keeping the glass in a salt medium (bath, paste, spraying, etc.) for a certain period of time below the glass transition temperature. Similar to thermal tempering, a compression layer is formed on the surface. Among them, chemical strengthening is the one purpose of this work. Chemical strengthening of glass below the glass transition range is nowadays widely used to strengthen thin glasses for modern multimedia, solar, transport and security applications [1]. In chemical strengthening method, a compression stress layer is formed on the surface of the glass substrate by ion exchange treatment. In ion exchange treatment, larger alkali ions in the contacting salt are introduced into the glass structure to replace smaller alkali ions already present in the glass structure. The larger ions are densely packed at the glass surface, generate a compressive stress layer which improves the mechanical strength [2-8]. Ion exchange treatment is generally performed either wet (liquid) ion exchange method or dry (solid) ion exchange method [9]. The term liquid or solid refers to the state of exchange mediums. The most commonly used chemical strengthening method is wet ion exchange in which the glass substrate is immersed in molten alkali salt bath containing larger alkali ions than the alkali ions in the glass. The larger alkali ions in the salt are penetrated by diffusion due to concentration difference at an elevated temperature. A common example of liquid molten salt bath includes potassium nitrate as the invading alkali ion source. Mixed salt blends can include salts of different alkali ions like $Na^+$ and $K^+$, or $Na^+$ and $Rb^+$ or $Na^+$ and $Cs^+$ [11]. The drawbacks of the wet ion exchange are described as; problem of environmental pollution due to the use of a large amount of molten alkali salts, limiting the use frequency due to the continuously changing concentration of alkali ions in the melt as ion exchange occurs and difficulty in applying to glasses with large surfaces [12]. The dry (solid) ion exchange method is performed by depositing a coating layer containing salt or salt mixtures on the glass surface [9-10, 12]. Dry ion exchange medium can include semi-solid pastes consisting of salt, at least one rheological agent such as clay to suspend the ions in the solid exchange medium. The viscosity of the paste made with clay is modified with water and other additives to suit the application which the paste applied to the glass substrate [11]. Dry ion exchange method is more economical, easier and faster to apply than the wet ion exchange method on large scale industrial use. Furthermore, possibility to process only a portion of the glass surface by dry ion exchange is another advantageous property [10]. Screen printing, which is one of the dry ion exchange techniques, enables the substrate to be coated with the precursor material, either its entirety, or in a selected pattern in a controlled manner [13]. Although not very common, in addition to liquid and solid exchange mediums, gas exchange methods are also possible [11].

Ion exchange processes cause compositional modifications that can change certain properties of substrates. For instance, while the strength of the glass is increased by the compressive stress created on the surface by $K^+$ ion, antimicrobial properties are obtained on the glass surfaces with ions such as $Ag^+$, $Cu^+$, $Cu2^+$ and $Zn2^+$. The compressive stress layer and/or the antimicrobial silver containing region can be formed simultaneously or in order [8, 14].

In chemical strengthening method, potassium ions (ionic radius: 1.52Å), which have a larger ionic radius than sodium ions (ionic radius: 1.16Å), in the contacting salt have replaced sodium ions in the glass plate, which is accompanied by a volume expansion of the surface layer. $K^+$-$Na^+$ ion exchange is the most commonly described route of chemical strengthening, on which the first paper was written by Kistler in 1962 [15-17]. At the ion exchange temperatures which are usually around $\pm100°C$ below the glass transition temperature, the glass cannot flow in a viscous manner at a speed high enough to reduce the expansion. Consequently, the expansion remains as a residual compressive stress in the surface layer of the glass, and improves the strength. Surface compressive stress and a depth of a compressive stress layer can be used as measures of the strength of chemically strengthened glass. The term "surface compressive stress" refers to compressive stress in the outermost layer of a glass plate, which is caused by incorporation of ions having a larger volume into the surface layer of the glass plate by ion exchange. Compressive stress cancels tension stress that is a factor of breaking glass plates, and thus contributes to higher strength of chemically strengthened glass plates than that of other glass plates. The "depth of a compressive stress layer" refers to the depth of an area where compressive stress is present, as measured from the outermost surface. A deeper compressive stress layer corresponds to higher ability to prevent a large micro crack on the surface of the glass plate from growing, in other words, higher ability to maintain the strength against damage [18]. Similarly, the antimicrobial silver containing region can be formed by chemical diffusion of cationic silver from a silver containing medium into exterior region of the glass substrate. Conditions such as contacting time, temperature, and silver concentration can be tailored to achieve a desired depth and concentration in the silver containing region Both potassium containing compressive stress layer and silver containing antimicrobial region extends inward from the surface of the glass substrate to a specific depth, the layers partially overlap [19].

There is no study yet reported on the simultaneous strengthening, enabling antimicrobial properties and functionalization of thin glasses by ion exchange performed with salt paste in one step with silk printing technique.. However, there are numerous studies in which thin glasses are either only strengthened or only given antimicrobial properties by coating salt pastes with various coating applications, followed by ion exchange during heat treatment. In WO2019209012A1, slurries prepared by mixing a salt solution and metal oxide particles are applied and heat-treated to strengthen glasses via ion exchange [12]. Fechner et al. have added silver, copper, zinc salts and any combination of mixtures of these salts to different oils and the final solution was screen printed and heat-treated to get soda-lime glasses with antimicrobial surface properties [20]. Kreski showed that chemically strengthened soda-lime silicate glasses having a reduced curvature can be produced by applying $KNO_3$ containing pastes followed by heat-treatment in air [11].

One attempt to produce antimicrobial glass is disclosed in EP1449816A1 Patent. In that patent, it is suggested to apply the silver salt paste onto glass substrate by screen printing and to perform heat treatment for realizing ion exchange process [13].

In US2017/0247291 A1 patent, float glasses were chemically strengthened by applying inorganic salt mixtures of $K_2SO_4$ and $KNO_3$ onto front and rear surfaces. Then, the glasses were immersed into molten $KNO_3$ salt bath for the second ion exchange.. It was showed that two step strengthening by two different techniques increased the compressive stress and strength of the glasses while it decreased the warpage [21].

KR101022591B1 patent discloses a method for manufacturing a glass substrate by strengthening a part not entirely of a glass surface by coating silk screen or roller coating method with a salt paste comprised of $KNO_3$ or KCl and a mixture of these salts [22].

U.S. Patent numbered 2008/0204889 A1 describes a method of producing a graded refractive index optical element comprising applying a paste containing a copper compound, an organic resin and an organic solvent and then performing heat treatment at a temperature below the softening temperature of the glass substrate [23]. One attempt of producing a gradient-index optical element having infrared absorbing ability by salt paste ion exchange is disclosed in European Patent 1925951A1. In this patent, a paste containing organic resin, an organic solvent and a salt compound (lithium, potassium, rubidium, cesium, silver, copper and thallium compounds singly or two or more mixed) was applied by using a syringe and ink-jet method and was heated to a temperature below the softening temperature of the glass substrate [24].

In WO2015156262 A1 patent, a paste including potassium salt, water and clay was applied by curtain coater and heat treated for producing chemically strengthened glass [25].

**Technical Problem that the Invention Aims to Solve**

Commonly used ion exchange techniques include molten salt bath, spraying of suspension or dispersion of the salt, and coating the salt paste by roller coating, curtain coating, spin coating, employing the salt paste onto the glass substrate by printing techniques such as ink-jet printing, screen printing, etc. These techniques are used for strengthening glasses when the salt contains potassium compounds, manufacturing optical waveguides, optical elements with a graded refractive index distribution when the salt contains silver, and copper compounds, nanometal glass hybrid nanocomposites, antimicrobial glasses, energy efficient glasses are obtained when the salt consists of silver, zinc or copper compound singly or as a combination of sodium compound. Molten salt bath from above mentioned techniques is used to get strengthened glass with antimicrobial properties in one or double or triple step ion exchange treatments. The molten bath technique is a costly process due to the energy requirement for melting salts and the need to use expensive salt compounds in large quantities. At the same time, when the salt bath is used continuously, the salt bath composition becomes polluted due to the alkali ions coming from the glass and/or there is no enough active ions in ion exchange left in the salt bath and effectiveness of the salt bath decreases Therefore, salt baths need to be renewed regularly. Spraying the salt suspension or dispersion is generally applied when manufacturing chemically strengthened glass. Although it is advantageous because less amount of salt is used compared to the bath technique and each glass is covered with fresh salt solution, it is difficult for the salt solution to adhere to the glass surface when sprayed on glasses in a vertical position. Besides, the corrosive effects of the salts used in the spraying technique are more than the bath technique.

Salt paste ion exchange is used to get thin glass surfaces with various properties depending on the salt composition. The paste technique has the advantages that it can be applied to the desired area and the desired properties can be obtained by using less salt compared to the bath technique used in industrial applications, thus saving both salt and energy costs. In ion exchange process applied with the paste technique, the efficiency of the process can be kept at the same level for each glass by using fresh salt in each application. In the application of the paste technique with screen printer, ion exchange can be achieved in the desired areas on the thin glass surface, since the design of the silk screen in the screen printer can be adjusted according to the areas where the glass surface is desired to be coated with the paste mixture. Paste application can also be done locally on the glass surface by using a tool like a brush or spatula. However, in case of application in this way, it will not be possible to spread the paste evenly on the surface. Application with brush or spatula is not practical and efficient in terms of repeatability due to user dependency. With the screen printer, the same thickness paste can be applied to the entire thin glass surface independent of the user.

In order to apply ion exchange to the desired areas by bath technique or spraying technique, it is necessary to mask the areas that are undesirable to be coated. This is an additional process step and increases the production time.

By exchanging ions with different sizes and polarizability levels locally, regions with different refractive indices are created on the glass surface, and ion exchange is used to create waveguide regions on the glass surfaces, and the glass substrates must be masked (photolithography) before the application. The refractive index of the glass surface can be changed in the desired regions without the need for masking with the technique that is the subject of the invention, which enables the coating of a paste mixture of $KNO_3$ and $AgNO_3$ with screen printing technique on thin glasses and obtaining multifunctional thin glasses by ion exchange performed in a single step. With the exchange of $K^+$ and $Na^+$, $Ag^+$ and $Na^+$ ions, waveguide regions are created on the glass surface, antimicrobial properties are enabled to the surfaces, and since thin glasses will be strengthened, the most important limitation in use, brittleness, is eliminated. Production time is reduced and the process is facilitated by applying ion exchange after paste application with screen printing technique without the use of photolithography.

This invention describes fast and cost-effective one step ion exchange method to increase mechanical strength, to give antimicrobial properties and to control optical properties of the thin glass substrate at the same time by screen printing with the salt composition consisting both potassium and silver compounds. There is no study yet reported on the simultaneous strengthening and imparting antimicrobial properties of thin glass by one step ion exchange with the screen printing technique used in the invention.

## Description of the Figures

**Figure 1** - Process flowchart of manufacturing glass with strengthened, antimicrobial and controllable optical properties according to the present invention

**Figure 2** - Transmittance spectra of untreated and ion exchanged glasses for varying $AgNO_3$-$KNO_3$ salt mixtures at a) 360°C 60 minutes, b) 420°C 20 minutes, c) 435°C 480 minutes

**Figure 3** - Absorbance spectra of untreated and ion exchanged glasses for varying $AgNO_3$-$KNO_3$ salt mixtures at a) 360°C 60 minutes, b) 420°C 20 minutes, c) 435°C 480 minutes

**Figure 4** - Energy Dispersive Spectrometer (EDS) line scan analysis results for the glass sample ion exchanged at 435°C for 480 min. with salt paste containing wt.% $5AgNO_3$-$95KNO_3$

**1:** Cleaning glass substrates with ethanol and distilled water

**2:** Preparation of paste by mixing $KNO_3$ and $AgNO_3$ salts with distilled water

**3:** Applying the paste with screen printing on the glass substrate

**4:** Drying of the coating layer formed by screen printing

**5:** Heat treatment for diffusion and exchange of $Ag^+$ and $K^+$ ions in the salt paste mixture and $Na^+$ ions in the glass

**6:** Cleaning of ion exchanged glasses with ethanol and distilled water

## Description of the Invention

The object of the invention is to provide a one-step ion exchange process to prepare multi-functional thin glass substrates by fast, easy and cost-effective manner. The method provides consistent conditions (in terms of salt composition) during the ion exchange due to use of a continuous (in each application) fresh salt source.

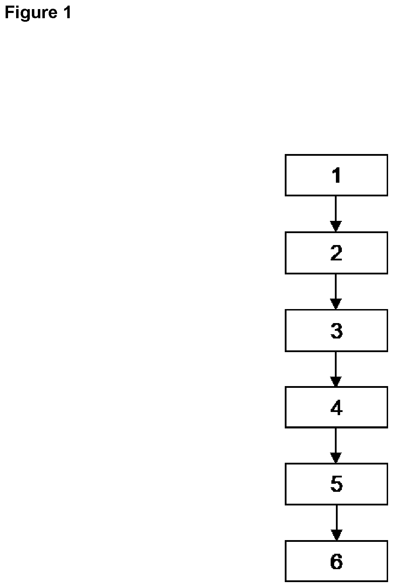

Figure 1 is a flow chart of manufacturing strengthened glass with antimicrobial capability and controllable optical properties in one step ion exchange process. As shown in Figure 1, the method of manufacturing the glass includes following steps:

**Step 1:** Cleaning the glass substrate

**Step 2:** Preparing a paste by mixing salts $KNO_3$ and $AgNO_3$ salts with distilled water

**Step 3:** Screen printing the paste upon the glass substrate surface

**Step 4:** Drying the screen printed coating film

**Step 5:** performing heat treatment for diffusion and exchange of $Ag^+$ and $K^+$ ions in the salt paste mixture with $Na^+$ ions in the glass

**Step 6:** Cleaning the ion exchanged glass substrates with ethanol and distilled water

Invading salt media is comprised at least one potassium salt such as but not limited to potassium nitrate ($KNO_3$), potassium chloride (KCI), potassium sulphate ($K_2SO_4$), potassium carbonate ($K_2CO_3$), potassium bromide (KBr), potassium iodide (KI), potassium bicarbonate ($KHCO_3$), potassium hydroxide (KOH) and potassium fluoride (KF). Furthermore, invading salt media is comprised one silver salt such as, but not limited to, silver nitrate ($AgNO_3$), silver chloride

(AgCl), silver sulphate (Ag$_2$SO$_4$) and silver carbonate (Ag$_2$CO$_3$). Besides, zinc and copper salts can be incorporated to the salt media instead of silver or with silver.

In the method of the invention, the choice of the glass used is not limited to a particular composition. The one and basic necessity is the glass substrate should contain one or more alkali metal component like Na, Li, etc. in an ionic state or as an oxide. The type of glasses can be soda lime silicate, borosilicate, alkali aluminosilicate, aluminoborosilicate, lead, alkali barium, phosphate, fluorophosphate, etc.

Soda lime silicate glass substrates, 60 mm x 60 mm dimensions and ≤1 mm thickness were cut from a mother sheet formed by a float glass process. The thickness of the glass is not especially limited, but it is preferably 3 mm or less, more preferably 2 mm or less, in order to effectively perform the chemical strengthening treatment. The dimensions of the glass can be enlarged depending on the screen frame. It is critical to clean the glass surface, as contamination on the glass surface slows ion exchange and/or causes inhomogeneous ion exchange, causing compression stress and layer depth variation. Therefore; pristine glass substrates were cleaned in ethanol and distilled water for 5 minutes, respectively, in ultrasonic mixer (step **1)** and were left to dry naturally in an upright position after cleaning. During cleaning process ethanol or isopropyl alcohol may be used.

It is important to mix ingredients of the paste to obtain an optimum degree ion exchange process. Inorganic salts as dry ion exchange materials should be mixed with liquid or a liquid-based substance capable of dissolving, dispersing or suspending the salts. It can be water or alcohol-based. In the present work, dry ion exchange materials ≤5 wt.% AgNO$_3$ and 95-99,75 wt.% KNO$_3$ were mixed with distilled water for getting a proper paste for coating. AgNO$_3$ and KNO$_3$ were mixed in agate mortar for 5 minutes before adding the distilled water and after adding the distilled water, whole paste was mixed in agate mortar for another 5 minutes (step **2).** Besides agate mortar, planetary ball mill, vibratory ball mill, stirred ball mill, roll ball mill can be used alternatively for mixing. The paste should have a proper viscosity to apply. If necessary, at least one rheological agent (binder) like kaolin or ochre or any other clays, barium carbonate or aluminium oxide can be added to adjust the viscosity of the paste to suit the application method and it ensures the paste adheres to the glass surface.

A silk mesh screen (305mesh, 50μm mesh opening, 34μm thread diameter) was placed above the surface of the glass. The atmosphere surface of glass was coated with wet paste composed of distilled water, AgNO$_3$ and KNO$_3$ salts (step 3). The concentration of solid salt in the paste was about 45 to 65% by weight and AgNO$_3$ concentration in the paste was ≤5 wt.%. Water has the advantage that water vapor released during drying does not affect the environment. The thickness of the paste is not restricted and varies according to the type, amount, etc. of potassium and/or silver compound contained in the paste. In the present work the thickness of the paste was about 0.1 mm to about 1 mm. The desired layer thickness can be achieved by multiple coating step, each followed by drying. The uniform distribution of the paste on the surface of the thin glass substrate should be provided for efficient ion exchange.

After applying the paste, the resulting coating (paste) film was dried at room temperature prior to heat treatment. Drying process was at least 3 hours, more preferably 6 hours, most preferably 24 hours (step **4).** The drying conditions are not limited as long as the coating film is dried, solvent component is sufficiently removed and the paste is dried to a solid.

Thereafter, the dried coating film is heat treated at a temperature below the transition temperature (T$_g$) of the glass substrate. Heat treatment temperature is a critical parameter to define ion exchange process and it is dependent on the glass substrate. If the temperature is higher than T$_g$, the ion exchange will be realized more rapid. However, one should avoid to select a temperature high enough to cause a stress relief in the glass. On the other hand, if the ion exchange temperature is too lower than T$_g$, the longer time will be necessary to strengthen the surface. For this reason, to determine the optimum ion exchange temperature, DTA measurement was performed by Seiko Exstar 6300 Model DTA/TG instrument (Tokyo, Japan), and T$_g$ of the glass was determined as 560°C. All heat treatments used in this work are lower than T$_g$ of the glass. The ion exchange heat treatments were performed for time between 20 to 480 minutes and at temperature between 350 to 450°C (step **5).** The heat treatment atmosphere was oxygen atmosphere. It is also possible to perform heat treatment in reducing atmosphere. Strengthened and antimicrobial thin glasses with the same transmittance values can be obtained via heat treatment in reducing atmosphere by ion exchange at lower temperatures and shorter times. During the heat treatment, KNO$_3$ and AgNO$_3$ salt mixture fully or partially melt into liquid or quasi-liquid state. The substrate was naturally cooled to room temperature inside the furnace. Thus, ion exchange of K$^+$ and Ag$^+$ into the glass was realized together for strengthening and antimicrobial activity capability.

During the ion exchange the thin glass substrates are lied flat inside the furnace. It can be considered to stand vertically or hang in the air. The heat treatment was realized in an electrical box furnace. For industrial production it is possible to use batch-type or continuous furnaces depending on the production volume.

After then the heat treatment step is completed, it was cleaned with ethanol and distilled water to remove the paste residues remaining on the glass surface (step **6).** Following the cleaning step, the glass substrates were left to dry in an upright position. The washing media should be selected to avoid any reactions with material from the paste and/or the glass composition of the glass article.

Some exemplary process conditions and codes of the glasses are listed in Table 1. R sample was defined as the untreated reference sample that it was not subjected to any surface treatment. K sample was ion exchanged at 435°C for 480 minutes after applying 100 wt.% $KNO_3$ salt paste by screen printing. S1-S9 samples were prepared by screen printing salt paste including increasing amount of $AgNO_3$ mixed with $KNO_3$.

**Table 1:** Exemplary sample codes and process conditions

| Sample code | Salt mixture (weight %) | Ion exchange temperature and time (°C and minutes) |
|---|---|---|
| R | - | - |
| K | 100 $KNO_3$ | 435, 480 |
| S1 | 99.75 $KNO_3$, 0.25 $AgNO_3$ | 360, 60 |
| S2 | 99 $KNO_3$, 1 $AgNO_3$ | 360, 60 |
| S3 | 95 $KNO_3$, 5 $AgNO_3$ | 360, 60 |
| S4 | 99.75 $KNO_3$, 0.25 $AgNO_3$ | 420, 20 |
| S5 | 99 $KNO_3$, 1 $AgNO_3$ | 420, 20 |
| S6 | 95 $KNO_3$, 5 $AgNO_3$ | 420, 20 |
| S7 | 99.75 $KNO_3$, 0.25 $AgNO_3$ | 435, 480 |
| S8 | 99 $KNO_3$, 1 $AgNO_3$ | 435, 480 |
| S9 | 95 $KNO_3$, 5 $AgNO_3$ | 435, 480 |

Compressive stress and depth of stress layer of the ion exchanged glasses described herein were measured by FSM-6000LE manufactured by Orihara Co., Ltd. (Tokyo, Japan). Measurements were taken from five different samples from each set and from 5 different points of each of these glasses' atmosphere surfaces. FSM measurements of exemplary samples were given in Table 2. In the ion exchanged glasses according to the present invention, the depth of compressive stress layer is 5$\mu$m or more, preferably 10$\mu$m or more, and more preferably 15 $\mu$m or more, less than 20 $\mu$m. The surface compressive stress value of the ion exchanged glasses according to present invention is preferably 300 MPa or more, more preferably 400 MPa or more, and most preferably 500 MPa or more. In the same ion exchange process conditions (435°C for 480 minutes), surface compressive stress of S7, S8, and S9 glasses were very close to K glass which ion exchanged with 100 wt.% $KNO_3$ salt.

**Table 2:** Exemplary surface compressive stress and depth of stress layer measurements for glasses

| Sample code | Salt mixture (Weight %) | Ion exchange temperature and time (°C and minutes) | Surface compressive stress (MPa) | Depth of stress layer ($\mu$m) |
|---|---|---|---|---|
| K | 100 $KNO_3$ | 435, 480 | 595 | 11 |
| S7 | 99.75 $KNO_3$, 0.25 $AgNO_3$ | 435, 480 | 590 | 14 |
| S8 | 99 $KNO_3$, 1 $AgNO_3$ | 435, 480 | 589 | 11 |
| S9 | 95 $KNO_3$, 5 $AgNO_3$ | 435, 480 | 586 | 12 |

Silver and potassium incorporation to the glass was studied using Scanning Electron Microscope-Energy Dispersive Spectrometer (SEM-EDS) technique. Analysis results in Table 3, shows the concentration of the elements on the glass surface. Silver concentration on the glass surface exhibited an increase with increasing $AgNO_3$ concentration in the salt paste, ion exchange temperature and ion exchange time. The amount of incorporated potassium ions to the glass surface decreased with increasing $AgNO_3$ concentration in the salt paste mixture. Thus, in the case of the increase in the amount of incorporated silver ions while a decrease in potassium ions, compressive stress on the surface slightly decreased.

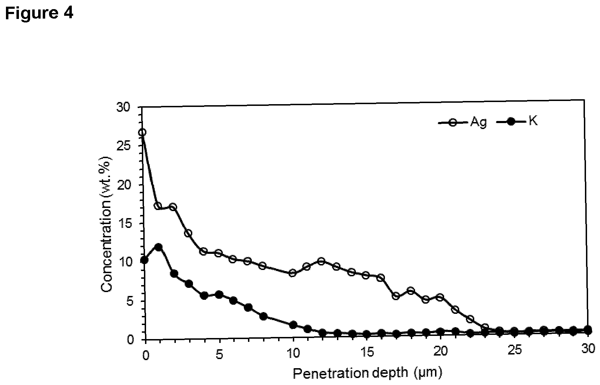

Penetration depths of incorporated ions were examined by EDS line scan analysis. The exemplary line scan analysis results graph for the glass ion exchanged at 435°C for 480 min. with salt paste containing wt.% $5AgNO_3$-$95KNO_3$ is shown in Figure 4. Potassium/sodium and silver/sodium exchanges took place simultaneously during the ion exchange due to the use of AgNO$_3$-KNO$_3$ mixed salt paste. The ionic radius of silver (129 pm) is much smaller than that of potassium (152 pm), so incorporation of silver ions is more effective and silver ions diffuse into the glass faster than the potassium ions. Therefore, the penetration depth of silver ions is higher than potassium ions (penetration depths of silver and potassium ions are 24$\mu$m and 12$\mu$m, respectively).

**Table 3:** Exemplary silver and potassium concentrations of ion exchanged glasses

| Sample code | Salt mixture (Weight %) | Ion exchange temperature and time (°C and minutes) | EDS results (Weight %) | |
|---|---|---|---|---|
| | | | Surface concentration | |
| | | | Ag | K |
| K | 100 KNO$_3$ | 435, 480 | - | 12.20 |
| S1 | 99.75 KNO$_3$, 0.25 AgNO$_3$ | 360, 60 | 2.04 | 13.07 |
| S2 | 99 KNO$_3$, 1 AgNO$_3$ | 360, 60 | 3.49 | 11.29 |
| S3 | 95 KNO$_3$, 5 AgNO$_3$ | 360, 60 | 6.08 | 11.24 |
| S4 | 99.75 KNO$_3$, 0.25 AgNO$_3$ | 420, 20 | 4.28 | 13.22 |
| S5 | 99 KNO$_3$, 1 AgNO$_3$ | 420, 20 | 5.60 | 12.52 |
| S6 | 95 KNO$_3$, 5 AgNO$_3$ | 420, 20 | 6.52 | 12.56 |
| S7 | 99.75 KNO$_3$, 0.25 AgNO$_3$ | 435, 480 | 5.37 | 11.99 |
| S8 | 99 KNO$_3$, 1 AgNO$_3$ | 435, 480 | 16.68 | 10.64 |
| S9 | 95 KNO$_3$, 5 AgNO$_3$ | 435, 480 | 26.77 | 10.35 |

The antimicrobial activity and efficacy of the ion exchanged glasses were determined in accordance with Japanese Industrial Standard JIS Z 2801 (2000), entitled "Antimicrobial Products Test for Antimicrobial Activity and Efficacy." The antimicrobial activities of the ion exchanged samples were determined against *Escherichia coli (E.coli)*. *E.coli* bacteria which represents the gram (-) microorganisms was preferred in the tests because it is frequently encountered. The antimicrobial activity is defined in JIS Z2801 standard as a value which shows the difference in logarithmic values of number of viable bacteria between the antimicrobial product and the untreated product after inoculation followed by incubation of bacteria. According to the testing method of JIS Z2801 standard, if the logarithmic reduction in number of bacteria from initial load (immediately after inoculation) and bacteria load at the end of 24 hours is 2 or higher, the test samples are inhibited the microbial growth, was judged to give antimicrobial activity and determined as they have the antimicrobial effectiveness. Glass samples which are not subjected to ion exchange treatment were used as control sample. As it is seen in Table 4, control sample which was untreated did not exhibit inhibition on the viable colonies (no log and percent reduction). According to exemplary embodiments, the multi-functional thin glasses are capable of inhibiting an antimicrobial efficacy greater than 99.9%.

Table 4. Antimicrobial efficacies of the glasses against *E.coli*

| Sample ID | E.coli | | Log reduction** | Percent reduction |
|---|---|---|---|---|
| | Microbial load - Number of surviving bacteria (cfu*/ml) | | | |
| | Beginning | At 35°C for 24th hour | | |
| R (Control sample) | $3.45 \times 10^5$ | $6.00 \times 10^5$ | -0.3 | - |
| S3 | $3.95 \times 10^5$ | <10 | >4.07 | >99.99 |
| S6 | $4.40 \times 10^5$ | <10 | >4.12 | >99.99 |
| S9 | $4.87 \times 10^5$ | <10 | >3.6 | >99.9 |
| *cfu: Colony forming unit* | | | | |
| *\*\*Log reduction: [Log Initial load (cfu/ml)-Log 24hour load (cfu/ml)]-Log change bacteria control* | | | | |

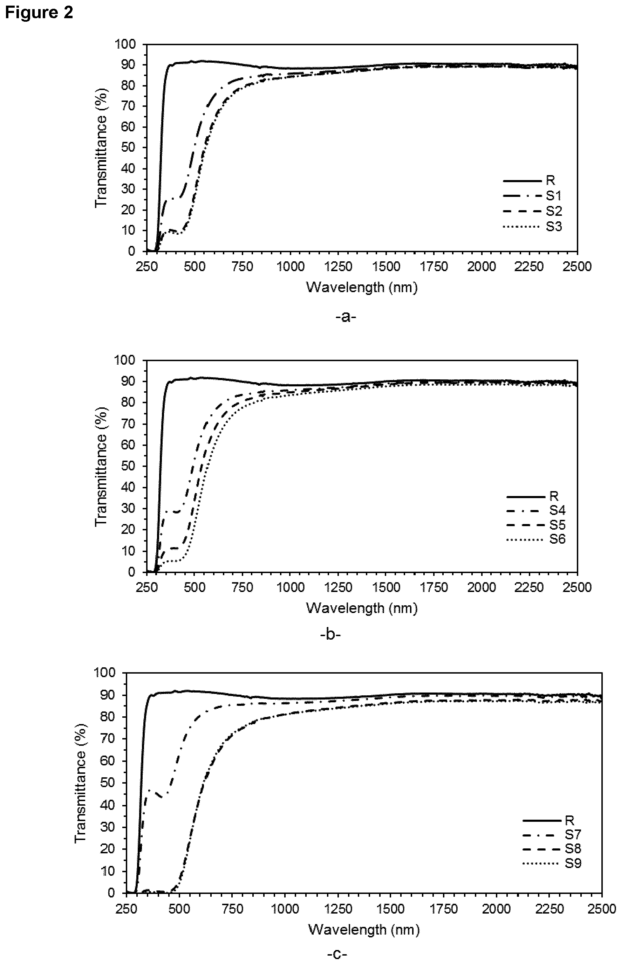

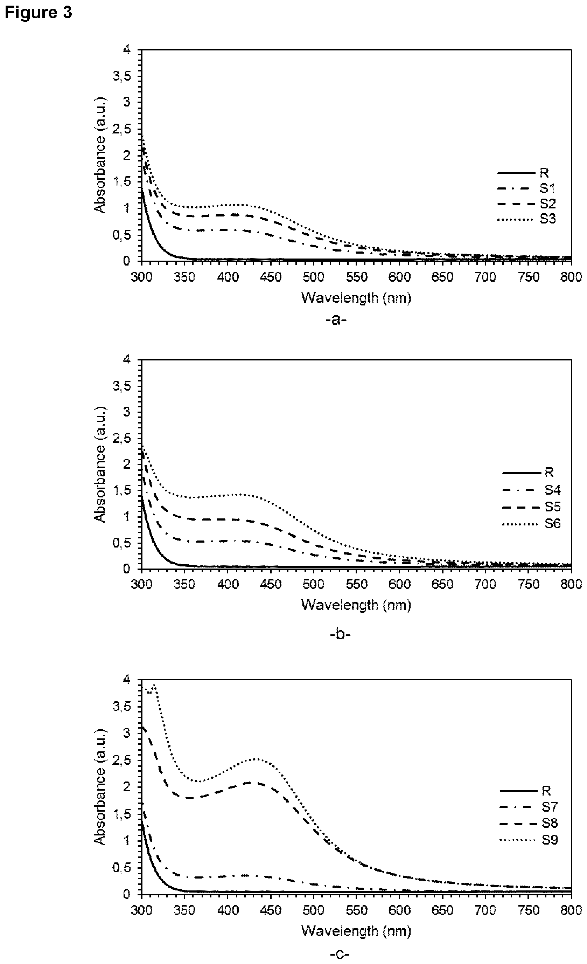

The use of Ag ions in ion exchange process can cause a yellowing due to formation and growth of metallic silver nanoparticles or clusters. When nanoscale silver particles are excited by electromagnetic radiations, they exhibit an optical absorption called Surface Plasmon Resonance (SPR). SPR absorption occurs due to the periodic oscillation of conduction band electrons in metal and takes place at the interface of the metal nanoparticle-dielectric matrix [26-31]. Despite the typical $Ag^0$ SPR peak is at a wavelength around 200 nm (UV region), when Ag atoms become larger and nanoparticles occur, their SPR peak shift to higher wavelengths (the visible range) [28, 32]. The silver nanoparticles/nanoclusters which absorb light at the SPR peak wavelength causes yellow colouring. In some applications of antimicrobial and strengthened glass a certain level optical transmittance is necessary. Therefore, while the strength of the glass is increased with the ion exchange process, it is also important that the optical transmittance is not reduced to a level that will affect the visual quality. For this reason, transmittance and absorbance measurement of ion exchanged glass were performed at room temperature by Lambda 750S UV-Vis-NIR spectrophotometer manufactured by Perkin Elmer (Massachusetts, USA). The measurements were carried out from the atmosphere surfaces of the ion exchanged glasses at a scanning speed of 5nm/s and in the wavelength range of 250-2500 nm. In order to make comparison, the same measurements were realized in glass that did not ion exchange (R glass) and glass ion exchanged for 480 hours at 435°C with 100 wt.% $KNO_3$ salt paste (K glass). The average transmittance and absorbance values were determined for each group by taking 6 measuring from atmosphere surfaces of the glass substrates. Figure 2 and 3 shows the transmission and absorption spectra of glasses. Light, solar direct, IR and UV transmittance values of ion exchanged glasses were calculated by using the data from transmittance measurements and were given in Table 5. Table 5 shows that transmittance values were decreased according to the increasing silver concentration in the paste, increasing ion exchange temperature and time. Decrease in the visible region transmission is attributed to the colouring effect of silver. Ion exchanging the glass substrates with process conditions defined in this invention, it is possible to produce solar control glasses with light transmittance in the range of 20-76% and with solar direct transmittance in the range of 24-68% which allow a comfortable working and living environment by limiting the solar heat entrance into the building and controlling the excessive cooling energy consumption and consequently cooling costs in air-conditioned environments.

Absorbance measurements were conducted between 250-2500nm, but to see the SPR peaks more clearly, the absorbance spectra was plotted between 300-800nm. As is apparent from Figure 3, the higher the silver nitrate concentration in the paste and higher ion exchange temperature, the more significant absorption bands can be seen.

Table 5: Exemplary transmittance values of glasses

| Sample code | Salt mixture (Weight %) | Ion exchange temperature and time (°C and minutes) | Transmittance (%) | | | |
|---|---|---|---|---|---|---|
| | | | Day light | Solar direct | IR | UV |
| R | - | - | 91.6 | 90.0 | 89.6 | 79.9 |
| K | 100 $KNO_3$ | 435, 480 | 91.4 | 89.6 | 89.0 | 79.3 |
| S1 | 99.75 $KNO_3$, 0.25 $AgNO_3$ | 360, 60 | 85.0 | 83.8 | 88.0 | 49.9 |

(continued)

| Sample code | Salt mixture (Weight %) | Ion exchange temperature and time (°C and minutes) | Transmittance (%) | | | |
|---|---|---|---|---|---|---|
| | | | Day light | Solar direct | IR | UV |
| S2 | 99 $KNO_3$, 1 $AgNO_3$ | 360, 60 | 77.1 | 77.7 | 87.2 | 31.0 |
| S3 | 95 $KNO_3$, 5 $AgNO_3$ | 360, 60 | 69.4 | 72.3 | 86.4 | 16.0 |
| S4 | 99.75 $KNO_3$, 0.25 $AgNO_3$ | 420, 20 | 77.1 | 78.2 | 87.4 | 36.1 |
| S5 | 99 $KNO_3$, 1 $AgNO_3$ | 420, 20 | 56.7 | 66.0 | 85.4 | 13.0 |
| S6 | 95 $KNO_3$, 5 $AgNO_3$ | 420, 20 | 60.0 | 67.2 | 85.5 | 11.0 |
| S7 | 99.75 $KNO_3$, 0.25 $AgNO_3$ | 435, 480 | 74.0 | 76.0 | 87.0 | 41.0 |
| S8 | 99 $KNO_3$, 1 $AgNO_3$ | 435, 480 | 26.7 | 51.0 | 81.7 | 1.3 |
| S9 | 95 $KNO_3$, 5 $AgNO_3$ | 435, 480 | 26.3 | 50.9 | 81.7 | 0.5 |

Silver absorbance (SPR-surface plasmon resonance) peaks are seen in the absorbance graphs of the glasses that have been ion exchanged for 480 minutes at 435°C. SPR absorption peaks are characteristic peaks seen at a wavelength according to the shape, structure and size of the nanoparticles and the structure of the glassy medium. Average particle radius (R) of the embedded nanoparticles are calculated by multiplying a Fermi velocity specifically defined for each element ($Vf=1.39 \times 10^8$ cm/s for silver) and the square of the experimentally measured surface plasmon vibration value (wavelength) of this material, dividing this value by the product of speed of light and the full-width half maximum of the optical absorption peak which is given in Equation 1 and results are shown in Table 6.

$$R = \frac{V_f * \lambda_p^2}{2\pi * C * \Delta\lambda} \qquad \text{Equation 1}$$

R= Average particle radius (nm)

Vf= Fermi Velocity of Electrons (Silver: $1.39 \times 10^8$ cm/s)

$\lambda_p$= SPR maximum peak intensity

C = Speed of light

$\Delta\lambda$ = FWHM (full-width half-maximum intensity of the optical absorption peak)

SPR peak was obtained in each of the glasses that applied ion exchange at 435°C for 480 minutes with salt pastes prepared by adding 0.25-1-5 wt.% $AgNO_3$ to the $KNO_3$ salt. It is known that the reduction of $Ag^+$ ions to metallic silver occurs at about 450°C. However, the fact that SPR peaks of metallic silver started to form at 435°C indicates that $Ag^+$ ions began to be reduced at this temperature and Si-O and Ag-Ag bonds began to form. SPR peak was not obtained at lower ion exchange temperature and shorter ion exchange time. This is due to the fact that most of the silver that enters the glass structure is in ionic form. In addition, it was determined that the silver nanoparticle radii calculated from the absorbance peaks with the increasing $AgNO_3$ amount in the salt paste mixture increased due to the shift of the SPR absorbance peaks in the absorbance graphs to higher wavelengths.

**Table 6:** Exemplary average particle radius of silver nanoclusters calculated from absorbance measurements on atmospheric surfaces of glasses

| Sample code | Salt mixture (Weight %) | Ion exchange temperature and time ($°C$ and minutes) | Absorbance peak wavelength (nm) | Average particle radius (nm) |
|---|---|---|---|---|
| S7 | 99,75 $KNO_3$ - 0,25 $AgNO_3$ | 435, 480 | 440 | 1.443 |
| S8 | 99 $KNO_3$- 1 $AgNO_3$ | 435, 480 | 448 | 1.481 |
| S9 | 95 $KNO_3$- 5 $AgNO_3$ | 435, 480 | 442 | 1.602 |

## Industrial Application of the Invention

In order for any industrial enterprise to produce alkali-containing thin glasses with a size of 1500 x 3000 mm and a thickness range of 0.5-2 mm, which have been strengthened and have antimicrobial properties, the company must purchase a fully automatic ultrasonic cleaning system, coating system and heat treatment furnace (approximate cost 270.000 Euro+VAT).

These glasses; on the screens of electronic devices such as mobile phones, cash machines, video game systems, electronic book readers, tablets, computers, navigation devices, on the glass parts of laboratory equipment that are required to remain sterile, in public subway-toilets, etc. It can be used in places where bacteria formation is not desired, on vehicle windows, white goods exteriors, various glassware and decoration products, pharmaceutical packaging, ultra-sensitive chemical and biological detection systems, and the production of optical waveguides.

## REFERENCES

1. Patschger, M., and Rüssel, C., Glass Technol-Part A, 57, 6-14 (2016)

2. Bartholomew, R.F., and Garfinkel, H.M., Glass Sci. Technol., 5, 217-270 (1980)

3. Shelby, J.E., Roy. Soc. Chem., 2005 (Kitap)

4. Wang, M., Wang, B., Anoop Krishnan, N.M., Yu, Y., Smedskjaer, M.M., Mauro, J.C., Sant, G., and Bauchy, M., J. Non. Cryst. Solids, 455, 70-74 (2017)

5. Sglavo, V.M., Talimian, A., and Ocsko, N., J. Non. Cryst. Solids, 458, 121-128 (2017)

6. Gy, R., Mater. Sci. Eng. B, 149, 2, 159-165 (2008)

7. Karlsson, S., Jonson, B., and Stålhandske, C., Glass Tech., 51, 2, 41-54 (2010)

8. Varshneya, A.K., J. Non. Cryst. Solids, 356, 2289-2294 (2010)

9. Bonghyang, K., et al., Wo 2016129729A1 Patent (2016)

10. Hyun, C.S., et al., Kr 20070105068A Patent (2007)

11. Kreski, P. K., US 2014/0178691A1 Patent (2014)

12. Gyu, C.Y., et al., Wo 2019209012A1 Patent (2019)

13. Eberhard, G., EP 1449816A1 Patent (2004)

14. Karlsson, S., Modification of Float Glass Surfaces by Ion Exchange, Doctoral Dissertations, School of Engineering, Linnaeus University, 2012

15. Kistler, S.S., J. Am. Ceram. Soc., 45, 59-68 (1962)

16. Garza-Mendez, F.J., Hinojosa-Rivera, M., Gomez, I., and Sanchez, E.M., Appl. Surf. Sci., 254, 1471-1474 (2007)

17. Wang, P.W., Appl. Surf. Sci., 120, 291-298 (1997)

18. Hasegawa, S., et al., US 2013/0219966 A1 Patent (2013)

19. Fechner, J.H., et al., WO 2005/030665 A1 Patent (2005)

20. Fechner, et al., US 2007/0172661 A1 Patent (2007)

21. Hatano, et al., US 2017/0247291 A1 Patent (2017)

22. Dong, K.K., KR 101022591B1 Patent (2011)

23. Suetsugu, T., et al., US 2008/0204889 A1 Patent (2008)

24. Toshihiko, E., et al., EP 1925951A1 Patent (2008)

25. Naofumi, A., et al., WO 2015156262A1 Patent (2015)

26. Karmakar, B., Som, T., Singh, S.P., and Nath, M., Trans. Ind. Ceram., 69, 3, 1-16 (2010)

27. Mathpal, M.C., Kumar, P., Kumar, S., Tripathi, A.K., Singh, M.K., Prakash, J., and Agarwall, A., Roy. Soc. Chem. Adv., 5, 12555-12562 (2015)

28. Rozra, J., Saini, I., Aggarwal, S., and Sharma, A., Adv. Mater. Let., 4, 8, 598-604 (2013)

29. Jimenez, J.A., Sendova, M., Hartsfield, T., and Sendova-Vassileva, M., Mater. Res. Bull., 46, 158-165 (2011)

30. Veron, O., Blondeau, J.P., Sousa Meneses, D.D., and Andreazza Vignolle, C., Surf. Coat. Technol., 227, 48-57 (2013)

31. Yang, X.C., Li, L.L., Huang, M., Zhao, J.F., And Hou, J.W., J. Non. Cryst. Solids, 357, 2306-2308 (2011)

32. Sheng, J., Li, J., and Yu, T., Int. J. Hydrog. Energy, 32, 2598-2601 (2007)

33. Manikandan, D., Mohan, S., and Nair, K.G.M., Mater. Res. Bull., 38, 9-10, 1545-50 (2003)

34. Molera, J., Baye's, C., Roura, P., Crespo, D. and Pradell, T., J. Am. Ceram. Soc., 90, 7, 2245-54 (2007)

## Claims

1. A method for the strengthening of thin glass with ion exchange in one step and providing antimicrobial properties, comprises the steps of;

   - Cleaning glass substrates with alcohol and distilled water
   - Preparation of ion exchange salt paste by mixing potassium salts and silver salts with distilled water
   - Coating the glass surface by applying the prepared salt paste to the glass surface with screen printing
   - Drying of the coating layer formed by screen printing
   - Application of heat treatment for diffusion and exchange of $Ag^+$ and $K^+$ ions in the salt paste mixture and $Na^+$ ions in the glass
   - Cleaning the ion exchanged glass with alcohol and distilled water.

2. The method according to claim 1, **characterized in that** the potassium salt is potassium nitrate ($KNO_3$).

3. The method according to claim 1, **characterized in that** the potassium salt is preferably contains at least one of potassium nitrate ($KNO_3$), potassium chloride (KCl), potassium sulphate ($K_2SO_4$), potassium carbonate ($K_2CO_3$), potassium bromide (KBr) and potassium iodide (KI) compounds.

4. The method according to claim 1, **characterized in that** the silver salt is silver nitrate ($AgNO_3$).

5. The method according to claim 1, **characterized in that** the silver salt preferably contains at least one of silver chloride (AgCl), silver sulphate ($Ag_2SO_4$) and silver carbonate ($Ag_2CO_3$) compounds.

6. The method according to claim 1, **characterized in that** the ion exchange salt paste contains 95-99.75% by weight of $KNO_3$ (potassium nitrate).

7. The method according to claim 1, **characterized in that** the ion exchange salt paste contains $\leq$5% by weight $AgNO_3$ (silver nitrate.

8. The method according to claim 1, **characterized in that** the solid salt concentration in the paste is between 45% and 65% by weight.

9. The method according to claim 1, **characterized in that** at least one rheological agent (binder) such as kaolin, ochre or other clays, barium carbonate or aluminium oxide is preferably added to the paste mixture.

10. The method according to claim 1, **characterized in that** the thickness of the paste coating layer is preferably between 0.1 mm and 1 mm.

11. The method according to claim 1, **characterized in that** the drying process of the paste layer is at least 3 hours, more preferably 6 hours, most preferably 24 hours.

12. The method according to claim 1, **characterized in that** the ion exchange heat treatment is carried out at a temperature of 350-450°C.

13. The method according to claim 1, **characterized in that** the ion exchange time is between 20 minutes and 480 minutes.

14. The method according to claim 1, **characterized in that** it is heat treated at a temperature below the glass transition temperature ($T_g$).

15. The method according to claim 1, **characterized in that** the heat treatment can preferably be carried out in a reducing atmosphere.

16. The method according to claim 1, **characterized in that** the glass is soda lime silicate.

17. The method according to claim 1, **characterized in that** the glass is preferably soda lime silicate, borosilicate, alkali alumina silicate, alumina borosilicate, lead, alkali barium, phosphate, fluorophosphate.

18. The method according to claim 1, **characterized in that** the glass thickness is preferably 3 mm or less, more preferably 2 mm or less.

19. The method according to claim 1, **characterized in that** the alcohol used for cleaning the glass is ethanol or isopropyl.

20. The method according to claim 1, **characterized in that** the glass contains one or more alkali metal components such as Na, Li in ionic form or as oxide.

**Figure 1**

**Figure 2**

-a-

-b-

-c-

**Figure 3**

-a-

-b-

-c-

**Figure 4**

Europäisches
Patentamt

European
Patent Office

Office européen
des brevets

# EUROPEAN SEARCH REPORT

Application Number

EP 22 16 0656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 103 723 929 B (UNIV YONSEI IACF) 13 February 2018 (2018-02-13) * the whole document * | 1-20 | INV. C03C21/00 C03C23/00 |
| Y | US 2020/095163 A1 (LUO XIAODONG [CN] ET AL) 26 March 2020 (2020-03-26) * paragraphs [0016], [0070], [0071], [0109] * | 1-20 | |
| Y | US 2016/322694 A1 (BORRELLI NICHOLAS FRANCIS [US] ET AL) 3 November 2016 (2016-11-03) * paragraphs [0052], [0059] * | 5,15 | |
| Y | JP 2004 083395 A (ASAHI GLASS CO LTD) 18 March 2004 (2004-03-18) * the whole document * | 8-11 | |
| Y | KR 2019 0123237 A (IUCF KOREA AEROSPACE UNIV [KR]) 31 October 2019 (2019-10-31) * the whole document * | 8-11 | TECHNICAL FIELDS SEARCHED (IPC) C03C |

The present search report has been drawn up for all claims

| Place of search | Date of completion of the search | Examiner |
|---|---|---|
| Munich | 15 June 2022 | King, Ruth |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 0656

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2022

| Patent document cited in search report | | Publication date | Patent family member(s) | | Publication date |
|---|---|---|---|---|---|
| CN 103723929 | B | 13-02-2018 | NONE | | |
| US 2020095163 | A1 | 26-03-2020 | CN | 107428586 A | 01-12-2017 |
| | | | JP | 6789235 B2 | 25-11-2020 |
| | | | JP | 2018511550 A | 26-04-2018 |
| | | | US | 2018009706 A1 | 11-01-2018 |
| | | | US | 2020095163 A1 | 26-03-2020 |
| | | | WO | 2016149860 A1 | 29-09-2016 |
| US 2016322694 | A1 | 03-11-2016 | CN | 107531562 A | 02-01-2018 |
| | | | US | 2016322694 A1 | 03-11-2016 |
| | | | WO | 2016176096 A1 | 03-11-2016 |
| JP 2004083395 | A | 18-03-2004 | NONE | | |
| KR 20190123237 | A | 31-10-2019 | CN | 112004783 A | 27-11-2020 |
| | | | KR | 20190123237 A | 31-10-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019209012 A1
- EP 1449816 A1
- US 20170247291 A1
- KR 101022591 B1
- US 20080204889 A1
- EP 1925951 A1
- WO 2015156262 A1

- WO 2016129729 A1, Bonghyang, K.
- KR 20070105068 A, Hyun, C.S.
- US 20140178691 A1, Kreski, P. K.
- US 20130219966 A1, Hasegawa, S.
- WO 2005030665 A1, Fechner, J.H.
- US 20070172661 A1, Fechner

**Non-patent literature cited in the description**

- **PATSCHGER, M. ; RÜSSEL, C.** *Glass Technol-Part A,* 2016, vol. 57, 6-14
- **BARTHOLOMEW, R.F. ; GARFINKEL, H.M.** *Glass Sci. Technol.,* 1980, vol. 5, 217-270
- **SHELBY, J.E.** *Roy. Soc. Chem.,* 2005
- **WANG, M. ; WANG, B. ; ANOOP KRISHNAN, N.M. ; YU, Y. ; SMEDSKJAER, M.M. ; MAURO, J.C. ; SANT, G. ; BAUCHY, M.** *J. Non. Cryst. Solids,* 2017, vol. 455, 70-74
- **SGLAVO, V.M. ; TALIMIAN, A. ; OCSKO, N.** *J. Non. Cryst. Solids,* 2017, vol. 458, 121-128
- **GY, R.** *Mater. Sci. Eng. B,* 2008, vol. 149 (2), 159-165
- **KARLSSON, S. ; JONSON, B. ; STÅLHANDSKE, C.** *Glass Tech.,* 2010, vol. 51 (2), 41-54
- **VARSHNEYA, A.K.** *J. Non. Cryst. Solids,* 2010, vol. 356, 2289-2294
- Modification of Float Glass Surfaces. **KARLSSON, S. ; ION EXCHANGE.** Doctoral Dissertations. School of Engineering, Linnaeus University, 2012
- **KISTLER, S.S.** *J. Am. Ceram. Soc.,* 1962, vol. 45, 59-68
- **GARZA-MENDEZ, F.J. ; HINOJOSA-RIVERA, M. ; GOMEZ, I. ; SANCHEZ, E.M.** *Appl. Surf. Sci.,* 2007, vol. 254, 1471-1474

- **WANG, P.W.** *Appl. Surf. Sci.,* 1997, vol. 120, 291-298
- **KARMAKAR, B. ; SOM, T. ; SINGH, S.P. ; NATH, M.** *Trans. Ind. Ceram.,* 2010, vol. 69 (3), 1-16
- **MATHPAL, M.C. ; KUMAR, P. ; KUMAR, S. ; TRIPATHI, A.K. ; SINGH, M.K. ; PRAKASH, J. ; AGARWALL, A.** *Roy. Soc. Chem. Adv.,* 2015, vol. 5, 12555-12562
- **ROZRA, J. ; SAINI, I. ; AGGARWAL, S. ; SHARMA, A.** *Adv. Mater. Let.,* 2013, vol. 4 (8), 598-604
- **JIMENEZ, J.A. ; SENDOVA, M. ; HARTSFIELD, T. ; SENDOVA-VASSILEVA, M.** *Mater. Res. Bull.,* 2011, vol. 46, 158-165
- **VERON, O. ; BLONDEAU, J.P. ; SOUSA MENESES, D.D. ; ANDREAZZA VIGNOLLE, C.** *Surf. Coat. Technol.,* 2013, vol. 227, 48-57
- **YANG, X.C. ; LI, L.L. ; HUANG, M. ; ZHAO, J.F. ; HOU, J.W.** *J. Non. Cryst. Solids,* 2011, vol. 357, 2306-2308
- **SHENG, J. ; LI, J. ; YU, T.** *Int. J. Hydrog. Energy,* 2007, vol. 32, 2598-2601
- **MANIKANDAN, D. ; MOHAN, S. ; NAIR, K.G.M.** *Mater. Res. Bull.,* 2003, vol. 38, 9-10
- **MOLERA, J. ; BAYE'S, C. ; ROURA, P. ; CRESPO, D. ; PRADELL, T.** *J. Am. Ceram. Soc.,* 2007, vol. 90 (7), 2245-54